# EUROPÄISCHE PATENTSCHRIFT

(11) **EP 0 850 792 B1**
(45) Veröffentlichungstag und Bekanntmachung des Hinweises auf die Patenterteilung: **20.02.2002**
(21) Anmeldenummer: 97121433.3
(22) Anmeldetag: 05.12.1997
(51) Int. Cl.: B60J 7/04

(54) **Kraftfahrzeug**
Motor vehicle
Véhicule automobile

(30) Priorität: 28.12.1996 DE 29622436 U
(43) Veröffentlichungstag der Anmeldung: 01.07.1998
(73) Patentinhaber: Wilhelm Karmann GmbH, D-49084 Osnabrück (DE)
(72) Erfinder: Russke, Klaus, 49143 Bissendorf (DE); Bunsmann, Winfried, 49143 Bissendorf (DE); Hoffmeister, Frank, 49080 Osnabrück (DE)
(74) Vertreter: Busse & Busse Patentanwälte

(56) Entgegenhaltungen:
- GB-A- 379 144
- US-A- 4 272 121
- US-A- 4 932 717
- US-A- 5 054 846

## Beschreibung

Die Erfindung bezieht sich auf ein Kraftfahrzeug mit einem karosseriefesten, eine Dachfläche abstützenden Seitenrahmen nach dem Oberbegriff des Anspruches 1.

Die gattungsbildende GB-A-379,144 zeigt ein Fahrzeug mit einem sich bis zum Heckbereich durchgehend erstreckenden Dach, das zwei gegeneinander bewegliche Dachteile 1,2 umfaßt, die jeweils etwa gleich lang sind und sich in Vertikalstellung vom Gleiter 6 bis zum Verbindungsscharnier 3 erstrecken. Diese Erstreckung entspricht ziemlich genau der Fahrzeugaufbauhöhe zwischen dem Fahrzeugboden und dem oberen Dachbereich, so daß in abgesenkter Stellung die gesamte Höhe des Fahrzeugaufbaus von den aneinandergefalteten Dachteilen 1,2 eingenommen wird. Fahrzeuginsassen ist daher die Sicht nach hinten bei in Packlage befindlichem Dach vollständig verbaut. Durch die Sichteinschränkung ist einerseits ein Sicherheitsrisiko geschaffen, da für den Fahrer die Sicht nach hinten fehlt. Zudem ist für alle Insassen das Raumgefühl beengt, da die Öffnung des Daches mit einem optischen Verschließen der Heckscheibe erkauft wird.

Der Erfindung liegt das Problem zugrunde, ein Fahrzeug der genannten Art von diesen Nachteilen zu befreien und ein besonders großzügiges Raumgefühl zu schaffen.

Die Erfindung löst das Problem mit den Merkmalen des Anspruches 1. Hinsichtlich weiterer vorteilhafter Ausgestaltungen wird auf die Ansprüche 2 bis 20 verwiesen.

Durch die Ablage der Dachteile bei einem gattungsgemäßen Fahrzeug unter Beabstandung zum Dachbereich ist eine freie Sicht nach hinten unbeeinträchtigt - sowohl bei geschlossenem Dach als auch in Packlage der Plattenteile.

Für die Ablage der Plattenteile mit Abstand unterhalb des Dachbereichs und vertikal voreinanderliegend bietet sich insbesondere der Raum hinter den Sitzlehnen einer Sitzreihe an, so daß eine wesentliche Beeinträchtigung des Fahrzeug-Innenraumes oder des Kofferraumvolumens vermieden werden kann. In Einzelfällen, etwa bei Fahrzeugen mit einem Doppelboden, kann auch eine horizontale Packlage der Plattenteile, etwa im Boden, in Frage kommen, erfordert jedoch einen großen mechanischen Aufwand.

Besonders vorteilhaft ist sowohl ein wesentlicher Teil der Dachlänge als auch der Dachbreite des Fahrzeugs von den Plattenteilen eingenommen, so daß nach deren Überführung in Offenstellung im wesentlichen die gesamte Dachfläche - eventuell bis auf der Sicherheit dienende Querträger - geöffnet ist, so daß sich ein großer Freiraum über den Insassen ergibt. Die Öffnung kann zusätzlich noch vergrößert werden, wenn das dem Fahrzeugheck zugewandte Plattenteil unmittelbar an die Heckscheibe anschließt und diese rahmenlos ausgebildet und versenkbar ist. Dann ergibt sich ein cabrioähnliches Freigefühl für die Fahrzeuginsassen, die jedoch durch die feststehenden Seitenrahmen (eventuell durch Querträger miteinander verbunden) einen vom geschlossenen Fahrzeug her gewohnten Sicherheitskäfig behalten.

An Stelle der im wesentlichen vollständigen Dachöffnung können auch nur einzelne Teile des Daches geöffnet werden, so daß beispielsweise die erste Sitzreihe bedacht bleibt, wohingegen sich die hinteren Sitzreihen - etwa für den Tourismusbereich - unter der Dachöffnung befinden.

Eine vorteilhafte Ausgestaltung der Erfindung sieht vor, daß die Plattenteile aus im wesentlichen transparentem Material (z. B. Plexiglas) bestehen, das gleichzeitig mit einem Sonnenschutz, z. B. in Form einer Metallbedampfung o. dgl. oder mit einer - eventuell einstrahlungssensitiven - Selbsttönung versehen ist.

Dabei können auch einzelne Plattenteile transparent sein und andere aus Blech (Metall oder Kunststoff) bestehen, um die Sonneneinstrahlung zu verringern.

Vorzugsweise ist die Führungsmechanik zur Überführung der Plattenteile in die bzw. aus der Offenstellung durch eine horizontale Führung und ein vertikal auf- und abwärtsbewegliches Hauptlager gebildet, wobei die Dachfläche drei versenkbare Dachteile umfaßt, die zu Ihrer Öffnung zunächst aus der flächigen Parallellage in eine vertikale Packlage aufgeschwenkt bzw. gegeneinander geklappt werden und dann in dieser vertikalen Packlage entlang der vertikalen Führung in den Karosserieinnenraum gefahren werden. Dadurch ergibt sich die Möglichkeit, die Vertikalbewegung der Plattenteile über ein einziges Hauptlager zu erreichen, so daß die Führungsmechanik einfach und platzsparend ausgebildet werden kann.

Vorteilhaft ist hierzu ein Antrieb für das Hauptlager vorgesehen, der über zwei Zug-Schub-Gestänge auf dieses einwirkt, wobei ein oberer Teil der vertikalen Bewegung im wesentlichen von dem ersten Zug-Schub-Gestänge und ein unterer Teil zumindest der Aufwärtsbewegung von dem zweiten bewirkt wird.

Dazu können die beiden Zug-Schub-Gestänge von jeweils einer Antriebsquelle angetrieben sein; bei unterschiedlichen Hebelwegen kann eine Synchronisation der Antriebsquellen dadurch erfolgen, daß diese im unteren Bereich der Vertikalbewegung mit der gleichen Kraft beaufschlagt werden, was insbesondere bei Verwendung von Hydraulikzylindern - auch Elektromotore sind natürlich möglich - durch ein gemeinsames Druckmittel, das auf beide Antriebsquellen mit gleichem Druck über eine gleiche Zeit einwirkt, einfach zu realisieren ist. Eine derartige Konstruktion liefert daher bei geringem mechanischem Aufwand und damit einer nur geringfügigen Innenraumbeeinträchtigung einen hohen Bedienkomfort für das Öffnen und das Schließen der Plattenteile des Fahrzeugdaches.

Weitere Vorteile und Einzelheiten der Erfindung ergeben sich aus der Zeichnung und der nachfolgenden Beschreibung eines Ausführungsbeispiels. In der Zeichnung zeigen:
- Fig.1: eine schaubildliche schematische Darstellung eines erfindungsgemäßen Kraftfahrzeuges mit geschlossenem Dach,
- Fig. 2: eine ähnliche Darstellung zu Fig. 1 mit schematisch eingezeichneter Führungsmechanik,

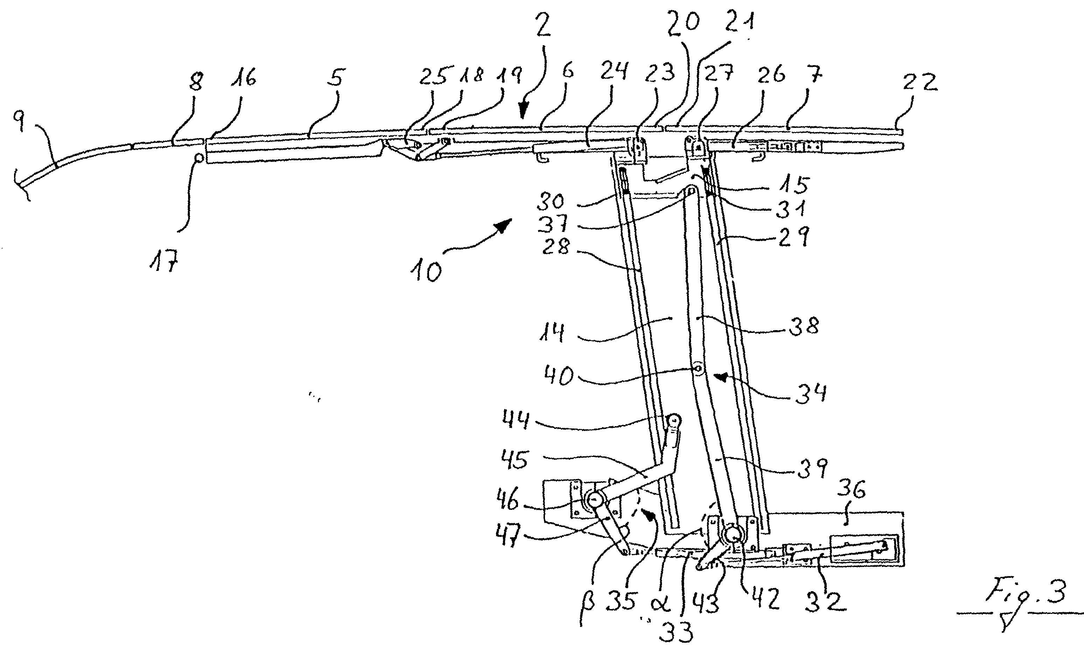

- Fig. 3: eine schematische Seitenansicht der Plattenteile und der Führungsmechanik in geschlossener Darstellung,
- Fig. 4: eine schematische schaubildliche Ansicht bei teilweise aufgeschwenktem vorderen und mittleren Plattenteil,
- Fig. 5: eine schematische Seitenansicht der Bewegungsmechanik und der Plattenteile in der Bewegungsphase nach Fig. 4,
- Fig. 6: eine weitere schaubildliche Ansicht der Bewegungsphase nach Fig. 4,
- Fig. 7: eine schematische Seitenansicht der Führungsmechanik und der Dachteile bei vollständig aufgeschwenkten vorderen Plattenteilen und horizontalem hinterem Plattenteil,
- Fig. 8: eine schaubildliche Darstellung mit vertikaler Lage der vorderen beiden Plattenteile und teilweise aufgeschwenktem hinteren Plattenteil,
- Fig. 9: eine ähnliche Darstellung zu Fig. 8 mit vollständig aufgeschwenktem hinteren Plattenteil,
- Fig. 10: eine schematische Seitenansicht der Führungsmechanik und der Plattenteile in der Bewegungsphase nach Fig. 9,
- Fig. 11: eine ähnliche Ansicht zu Fig. 10 bei teilweise abwärtsbewegten Plattenteilen,
- Fig. 12: eine ähnliche Ansicht zu Fig. 11 bei vollständig abgesenkten Plattenteilen,

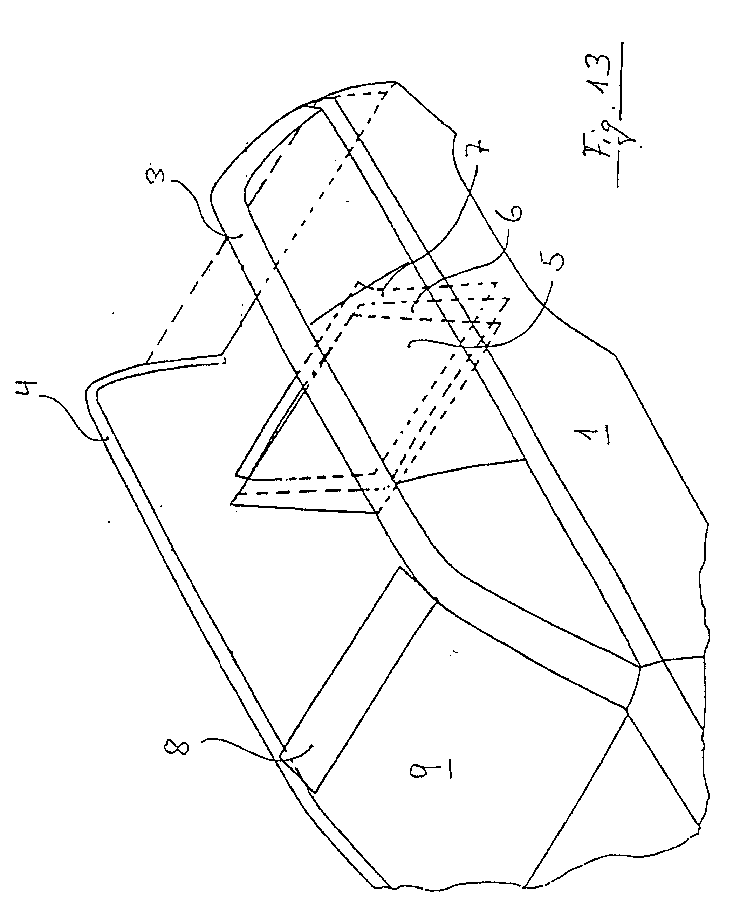

- Fig. 13: eine schaubildliche Ansicht der Bewegungsphase nach Fig. 12.

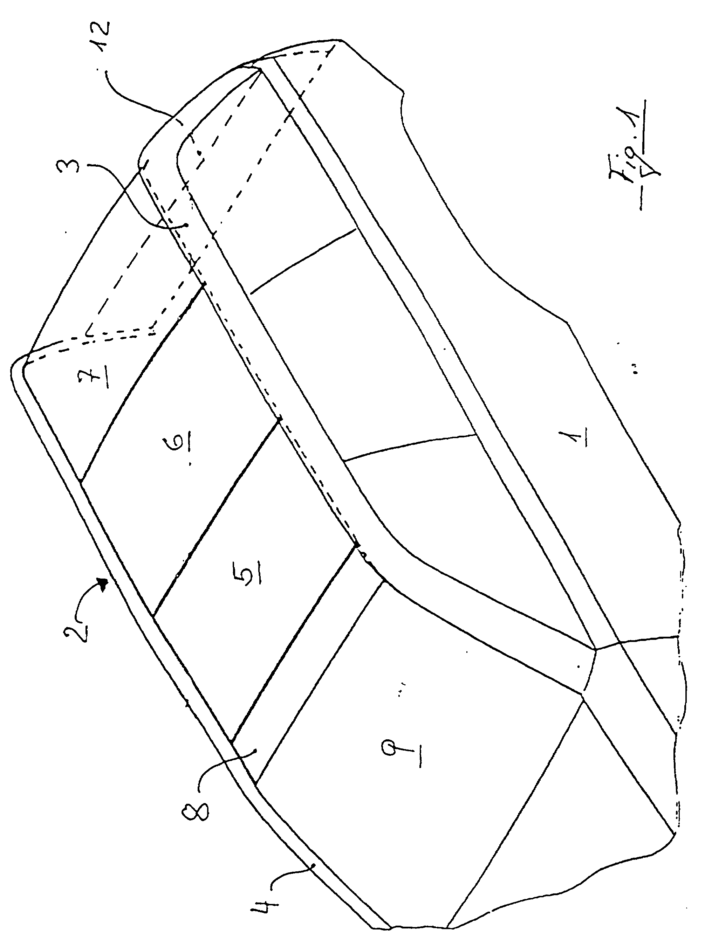

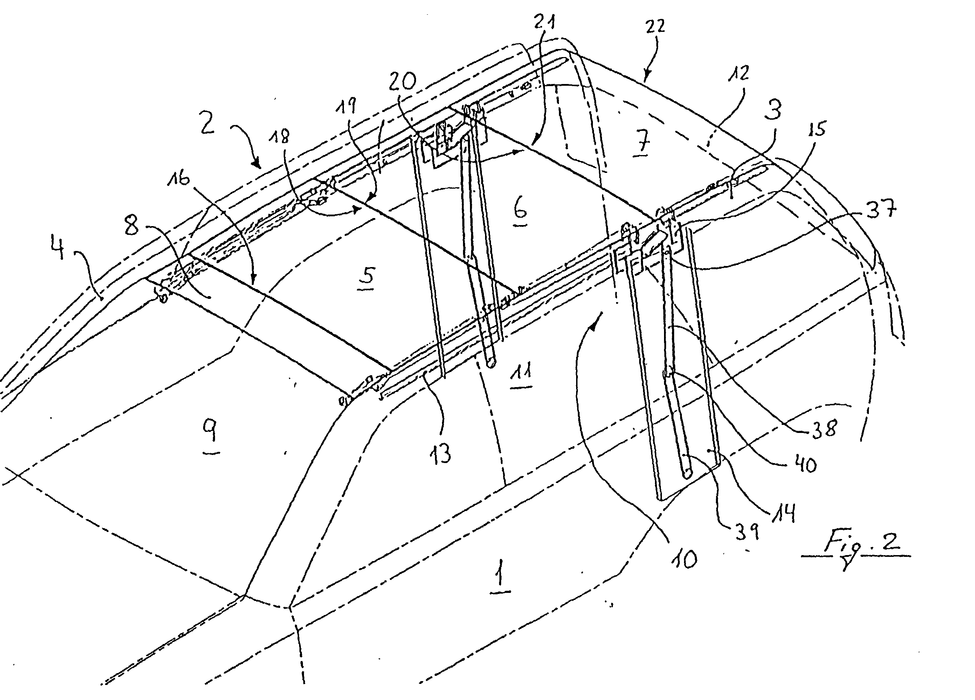

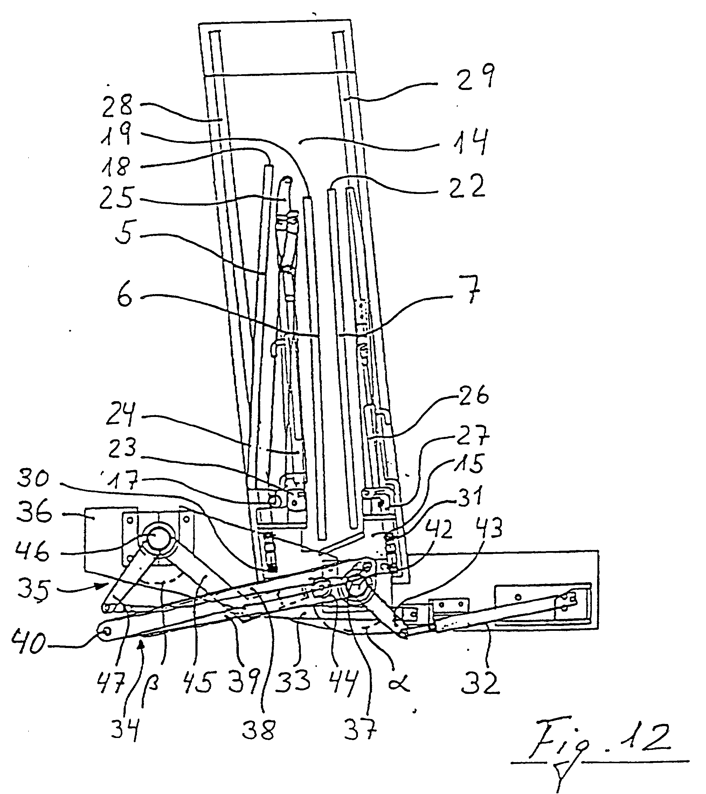

Im einzelnen weist das Kraftfahrzeug 1 eine Dachfläche 2 auf, die sich zwischen diese abstützenden Seitenrahmen 3,4 erstreckt und in Schließstellung (Fig. 1, Fig. 2) flächig parallel liegende Plattenteile 5,6,7 umfaßt. Den Plattenteilen 5,6,7 kann ein Windabweiser 8 in Fahrtrichtung vorgeordnet sein, der im wesentlichen an die obere Kante der Windschutzscheibe 9 anschließt, gelenkig angeordnet und in eine sich nach hinten öffnende Kipplage bewegbar ist. Die Plattenteile 5,6,7 sind insgesamt über eine Führungsmechanik 10 in eine Packlage (Fig. 12) in den Karosserieinnenraum 11 einfahrbar.

Im vorliegenden Ausführungsbeispiel bestehen die Plattenteile 5,6,7 - ebenso wie der Windabweiser 8 - aus einem transparenten Material, wofür sich insbesondere Glas oder Plexiglas anbieten. Die Plattenteile 5,6,7 weisen dann einen zusätzlichen Sonnenschutz auf, der in einer Tönung der Plattenteile 5,6,7 bestehen kann und/oder in zusätzlichen Sonnenschutzmitteln, wie etwa Rollos, die unterhalb der Plattenteile 5,6,7 angeordnet sind. Auch ist es möglich, die Tönung der Plattenteile 5,6,7 von der Intensität des eingestrahlten Lichtes abhängig zu machen, beispielsweise durch eine Silberbromidbeschichtung. Eine Bedampfung oder anderweitige Beschichtung der Plattenteile 5,6,7 ist in jedem Falle vorgesehen, wobei die einzelnen Plattenteile 5,6,7 auch unterschiedlich beschichtet sein können, um etwa den Fahrerbereich kühler zu halten als den hinteren Bereich des Wagens oder um nur oberhalb der Sitzreihen transparent zu sein.

Es ist auch möglich, alle oder einzelne Plattenteile (z. B. über dem Kofferraum oder den hinteren Sitzreihen) aus einem undurchsichtigen Metall- oder Kunststoffblech herzustellen, um hierdurch die Sonneneinstrahlung in den Fahrzeuginnenraum 11 zu begrenzen. Die Plattenteile 5,6,7 können als Deformationselemente ausgebildet und in dazu geeigneter Anbindung mit den Seitenrahmen 3,4 verbunden sein.

Grundsätzlich kommt eine solche Dachausbildung mit mehreren, in eine Offenstellung überführbaren Plattenteilen 5,6,7 insbesondere für Fahrzeuge mit einer langen Dachfläche 2 in Frage, also für Vans, Geländewagen und Kombi-Fahrzeuge wie auch für kleinbusähnliche Kraftwagen, ist jedoch auch bei Stufenheckfahrzeugen denkbar. Vans, Großraumlimousinen und ähnliche Fahrzeuge weisen den Vorteil auf, daß hier ein großer Innenraum 11 zur Verfügung steht, um die Plattenteile 5,6,7 in Packlage aufnehmen zu können.

Im vorliegenden Ausführungsbeispiel ist sowohl im wesentlichen die gesamte Länge als auch vollständige Breite der Dachfläche 2 zwischen den Seitenrahmen 3,4 von den in eine Offenstellung überführbaren Plattenteilen 5,6,7 eingenommen, so daß in Offenstellung eine praktisch vollständige Freigabe der Dachfläche 2 erreicht ist. Abweichend hiervon ist es auch möglich, nur Teilbereiche der Dachfläche 2 mit in Offenstellung überführbaren Plattenteilen 5,6,7 zu versehen, um beispielsweise einen geschlossenen Fahrerraum zu behalten und nur oberhalb der hinteren Sitzreihen die Dachfläche 2 öffnen zu können. Solche Fahrzeuge sind beispielsweise im Touristikbereich vorstellbar.

Das hintere Plattenteil 7 kann an ein karosseriefestes hinteres Querteil der Dachfläche 2 angrenzen, das gleichzeitig als Querträger und eventuell (Teil-)Abdeckung des Kofferraumes dienen kann.

Ein besonderes Freiluftgefühl für die Insassen ergibt sich jedoch, wenn die gesamte Dachfläche 2 geöffnet werden kann, was noch unterstützt wird, wenn die Heckscheibe 12 rahmenlos ausgebildet und nach unten hin versenkbar ist. Dann reicht die offene Fläche von der oberen Kante der Windschutzscheibe 9 oder einem daran anschließenden Windabweiser 8 bis hin zur Unterkante der Heckscheibe 12.

Die Anzahl der Plattenteile 5,6,7 ist variabel und abhängig von den konstruktiven Gegebenheiten der Führungsmechanik 10. Beispielsweise kann statt der drei im Ausführungsbeispiel gezeigten Plattenteile 5,6,7 auch eine größere Zahl von im wesentlichen streifenförmig ausgebildeten Plattenteilen 5,6,7 vorhanden sein, die entweder gegeneinander abknicken oder sich lamellenartig übereinander schieben, um die Offenstellung zu erreichen. Auch eine Ausbildung eines Daches mit nur ein oder zwei Plattenteilen 5 ist prinzipiell möglich, wobei jedoch bei einem einzelnen Plattenteil 5 ein solcher Mechanismus zur vertikalen Absenkung einen unverhältnismäßig hohen Bauaufwand bedeuten würde.

Die Führungsmechanik 10 umfaßt im Ausführungsbeispiel eine horizontale, dem Seitenrahmen 3 bzw. 4 zugeordnete Führung 13, die als Führungsschiene ausgebildet ist, sowie eine im wesentlichen vertikale Führung 14, die die Absenkung der Plattenteile 5,6,7 in den Fahrzeuginnenraum 11 führt. Die Führung 14 ist beispielsweise in die C-Säule integriert und dadurch optisch unauffällig und raumsparend angeordnet.

Um diese vertikale Bewegung zu ermöglichen, sind die Plattenteile 5,6,7 miteinander verbunden und insgesamt an einem Hauptlager 15 angeordnet, das in der Führung 14 auf und ab bewegt werden kann. Diese Vertikalbewegung des Hauptlagers 15 in der Führung 14 kann stattfinden, nachdem die Plattenteile 5,6,7 in eine vertikale Ausrichtung gebracht worden sind, wobei sie während der Auf- und Abwärtsbewegung in der vertikalen Ausrichtung verbleiben. Die Plattenteile 5,6,7 können unterschiedliche Ausdehnungen und Formen haben, beispielsweise quadratisch oder rechteckig sein, insbesondere werden jedoch die Plattenteile 5,6,7 im wesentlichen gleich groß sein, so daß sie in voreinandergepackter Lage in vertikaler Ausrichtung etwa die gleiche Höhenausdehnung haben.

Im Ausführungsbeispiel ist der vorderen Querkante 16 des in Fahrtrichtung vorderen Plattenteils 5 ein in die Führungsschienen 13 der Seitenrahmen 3 und 4 eingreifendes Führungsglied 17 zugeordnet, wohingegen dieses vordere Plattenteil 5 mit seiner hinteren Querkante 18 an die vordere Querkante 19 des mittleren Plattenteils 6 anschließt und die Plattenteile 5,6 über ein Viergelenk 25 derart gelenkig miteinander verbunden sind, daß sie im Bereich der einander zugewandten Querkanten 18,19 voneinander abknicken können.

Das mittlere Plattenteil 6 ist im Bereich seiner hinteren Querkante 20 gelenkig an dem Hauptlager 15 angeordnet, so daß es gegenüber diesem in einem sich in Fahrtrichtung öffnenden Schwenkwinkel aufwärts geschwenkt werden kann.

Hingegen ist das hintere Plattenteil 7 mit seiner vorderen Querkante 21 an dem Hauptlager 15 angelenkt und kann daher gegenläufig zu dem mittleren Plattenteil 6 aufgeschwenkt werden.

Es ist auch möglich, daß an der hinteren Querkante 22 des hinteren Plattenteils 7 die Heckscheibe 12 angelenkt ist, analog wie das Plattenteil 5 an dem mittleren Plattenteil 6 angelenkt ist. Dann jedoch müßte die an dem hinteren Plattenteil 7 hängende Heckscheibe 12 mit in den Fahrzeuginnenraum 11 gefahren werden, um die Offenstellung zu erreichen, wodurch sich die Ausmaße des Paketes mit den in Packlage gebrachten Teilen vergrößern würden. Daher ist die Heckscheibe 12 als von den Plattenteilen 5,6,7 unabhängiges Teil ausgebildet, das nach unten in die Heckklappe versenkbar sein kann.

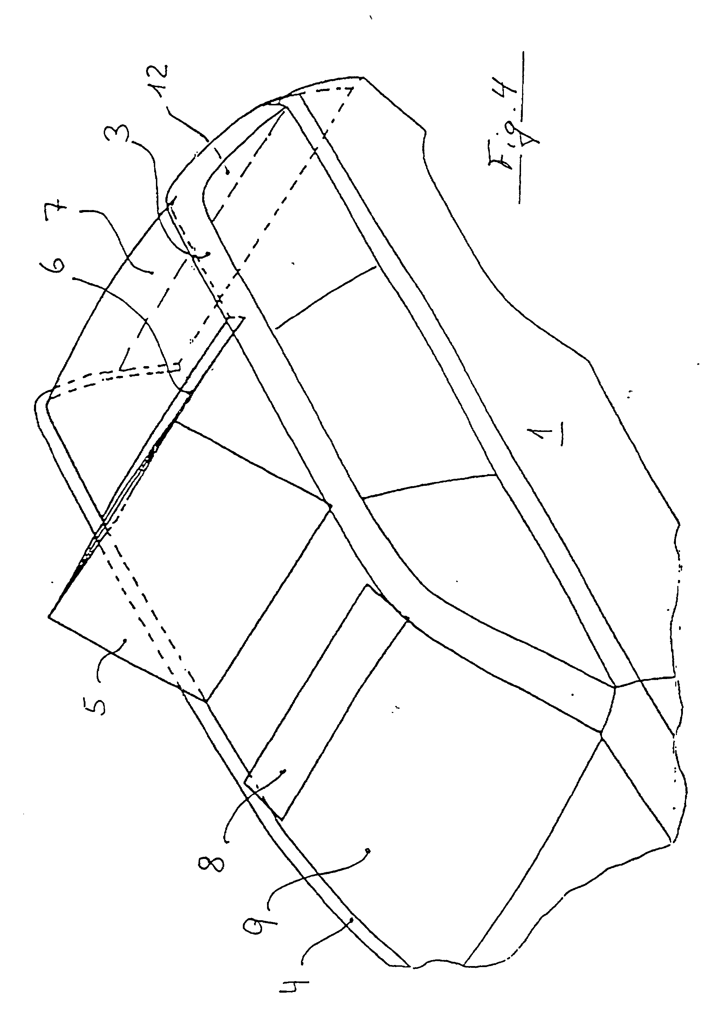

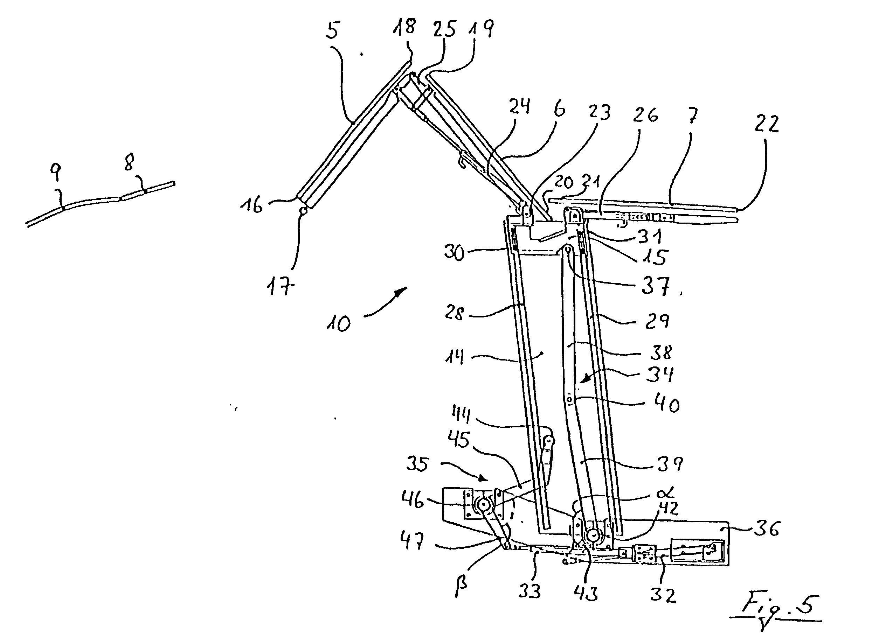

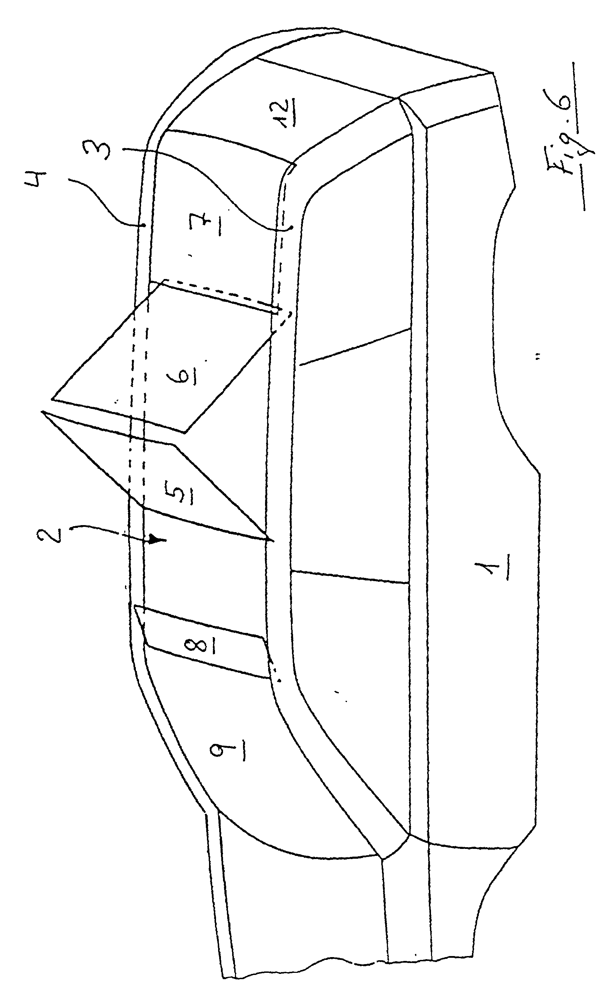

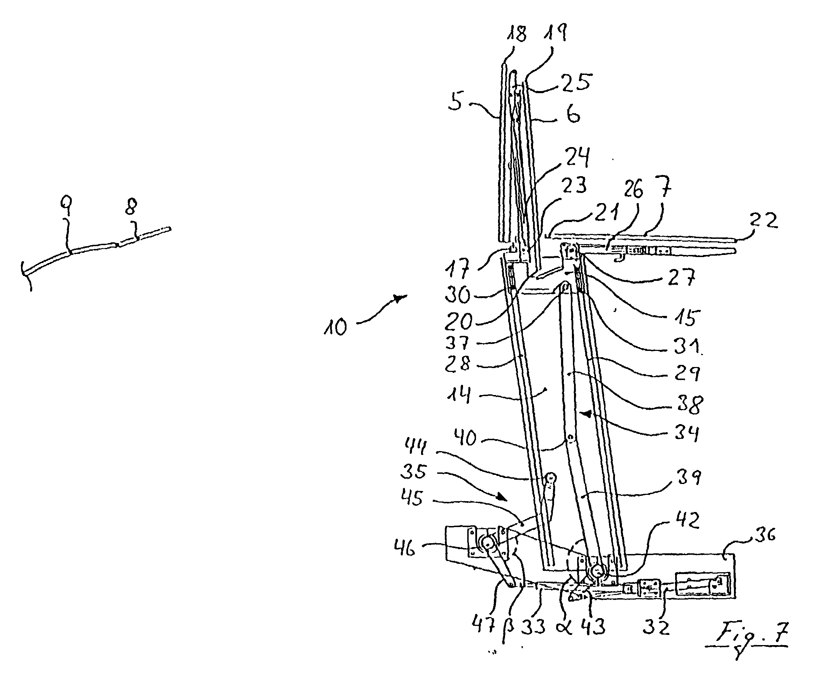

Zum Öffnen der die Dachfläche 2 ausbildenden Plattenteile 5,6,7 wird zunächst das mittlere Plattenteil 6 um sein an dem Hauptlager 15 befindliches Gelenk 23 in einem sich in Fahrtrichtung öffnenden Winkel verschwenkt, wozu ein Antrieb, beispielsweise ein Hydraulikzylinder 24, dient, der einenends mit dem Gelenk 23 und anderenends mit dem Viergelenk 25 im Bereich der Querkanten 18,19 zwischen dem vorderem Plattenteil 5 und dem mittleren Plattenteil 6 verbunden ist. Der Hydraulikzylinder 24 übt eine Zugbewegung auf das Viergelenk 25 aus, wodurch einerseits die Platten 5 und 6 gegeneinander abknicken und andererseits das vordere Plattenteil 5 über sein Führungsglied 17 in der seitlichen Führungsschiene 13 nach hinten verfahren wird (Fig. 4 bis Fig. 6). Die Endstellung ist erreicht, wenn das Führungsglied 17 so weit horizontal nach hinten verfahren ist, daß es sich im Bereich des Hauptlagers 15, und damit dem Gelenk 23 benachbart, befindet. Dann stehen die Plattenteile 5,6 in einer nahezu vertikalen Stellung (Fig. 7 bis Fig. 10).

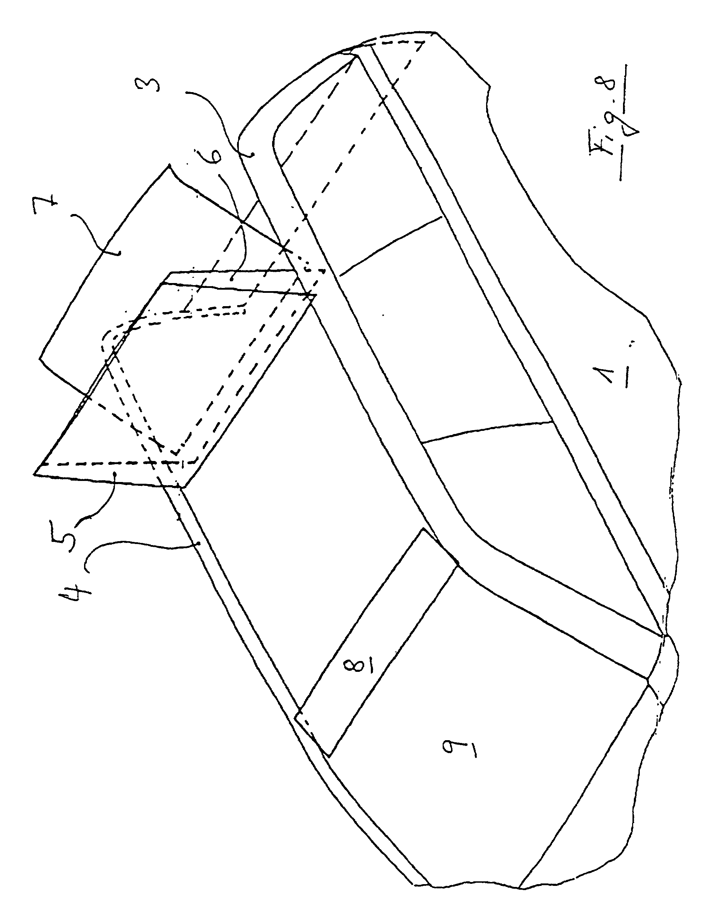

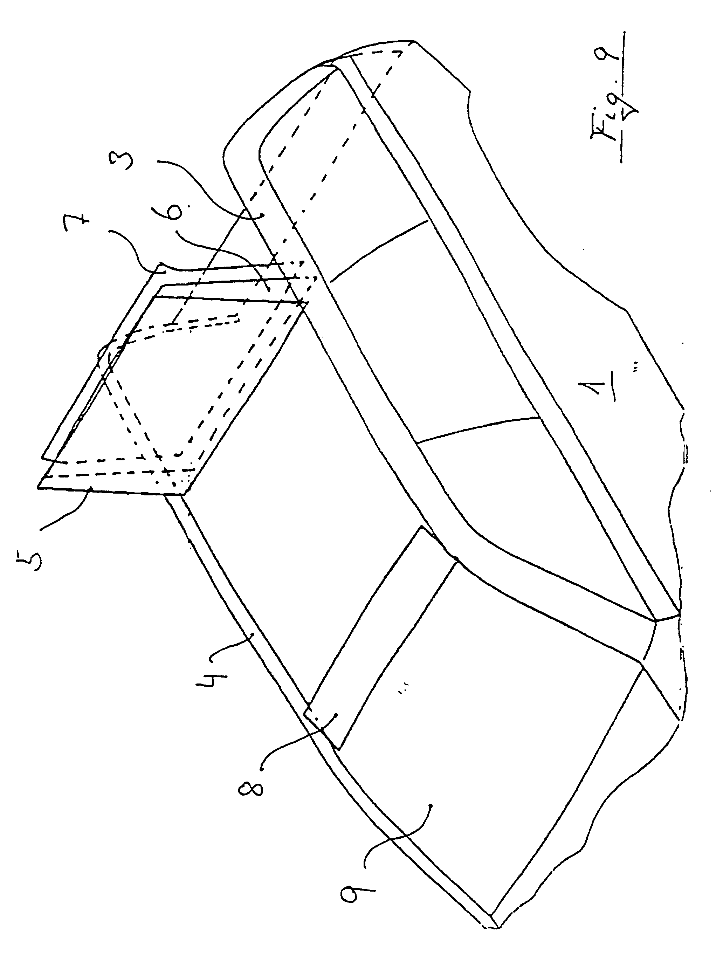

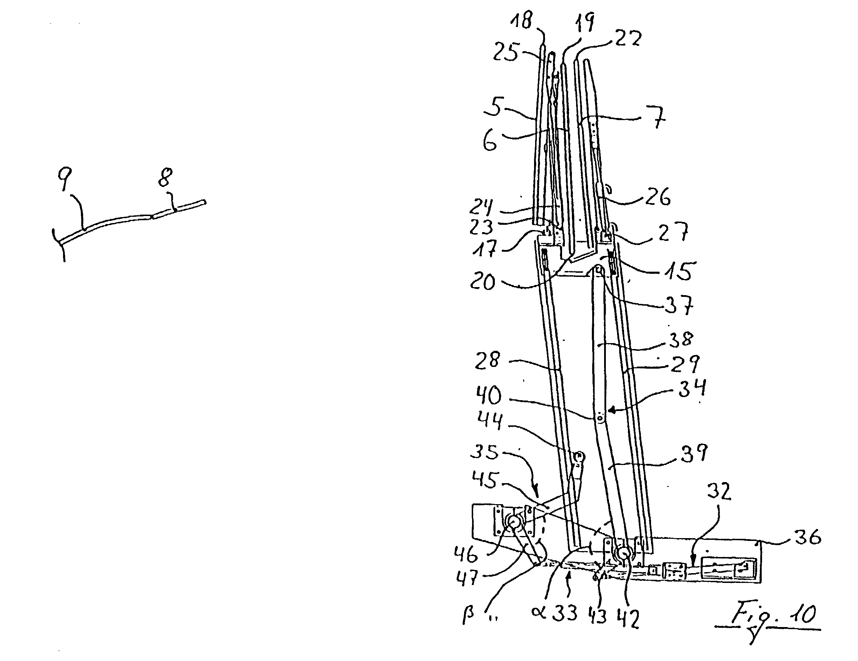

Das hintere Plattenteil 7 kann während dieser Schwenkbewegung der vorderen Plattenteile 5,6 entweder in horizontaler Position verbleiben, wie dieses in der Fig. 7 dargestellt ist, insbesondere um im Bereich der Querkanten 20,21 der Plattenteile 6,7 ein gegenseitiges Stören zu vermeiden. Bei entsprechender Ausbildung der Schwenkbewegung der Plattenteile 6,7 können jedoch diese auch gleichzeitig verschwenkt werden. Das Plattenteil 7 schwenkt gegenläufig zu dem Plattenteil 6, wozu ein Antrieb, etwa ein Hydraulikzylinder 26 das an dem Hauptlager angeordnete Gelenk 27 mit einem mittleren oder hinteren Bereich des Plattenteils 7 verbindet. Bei Ausfahren des Hydraulikzylinders 26 wird damit das Plattenteil 7 aufgeschwenkt (Fig. 8), bis es in einer vertikalen Packlage in etwa parallel zu den aufgeschwenkten Plattenteilen 5,6 seine voll aufgeschwenkte Endstellung erreicht (Fig. 9, Fig. 10).

Diese Endstellung entspricht der Packlage im Fahrzeuginnenraum 11, so daß die Überführung der Plattenteile 5,6,7 in den Fahrzeuginnenraum 11 bereits in dieser Packlage erfolgt. Dadurch ist auch während der Ausführung der Bewegung der Innenraum nicht unnötig eingeschränkt, beispielsweise dadurch, daß zunächst Platten 5,6,7 in den Innenraum einschwenken und dadurch die Kopffreiheit vorübergehend verringern würden. Es sind natürlich auch andere Lösungen vorstellbar, bei denen die Plattenteile 5,6,7 entweder nacheinander oder auch gleichzeitig in den Fahrzeuginnenraum 11 eingefahren werden, ohne vorher in die senkrechte Packlage gebracht worden zu sein.

Zur Abwärtsbewegung des Hauptlagers 15, das mit den Plattenteilen 5,6,7 über die Gelenke 23 und 27 verbunden ist, ist dieses in der Vertikalführung 14 über Führungsbahnen 28 und 29 geführt, in die das Hauptlager 15 mit Rollen 30 und 31 eingreift.

Zum Abwärts- bzw. Aufwärtsbewegen des Hauptlagers 15 und der mit diesem verbundenen Plattenteile 5,6,7 sind im unteren Fahrzeugbereich an einem Rahmenteil 36 Antriebe 32 und 33 angeordnet, die ihre Antriebskraft über Zug-Schub-Gestänge 34,35 auf das Hauptlager 15 übertragen. Um die baulichen Ausmaße der Antriebe 32,33 sowie der Übertragungselemente 34,35 gering zu halten, sind zwei Antriebe 32,33 ausgebildet, die unterschiedliche Phasen der Vertikalbewegung des Hauptlagers 15 bewirken.

Es ist natürlich auch möglich, beide Zug-Schub-Gestänge über einen gemeinsamen Antrieb 32 anzutreiben oder insgesamt nur ein Zug-Schub-Gestänge zu verwenden. Die Antriebe 32,33 können in verschiedenen bekannten Arten ausgebildet sein, beispielsweise als Elektromotor(e) oder Hydraulikzylinder.

In der oberen Ausgangslage (Fig. 10) des Hauptlagers 15 ist dieses allein in Eingriff mit dem Zug-Schub-Gestänge 34, das von dem im Ausführungsbeispiel als Hydraulikzylinder ausgebildeten Antrieb 32 angetrieben wird. Dazu ist an einer Anlenkachse 37 ein oberer Hebel 38 des Zug-Schub-Gestänges 34 an dem Hauptlager 15 angelenkt, der über ein Kniegelenk 40 mit dem unteren Hebel 39 verbunden ist, der an seinem unteren Ende in dem ortsfest gegenüber dem Rahmen 36, und damit der Karosserie, gelagerten Gelenk 42 gehalten ist, Über dieses Gelenk 42 ist ein kurzer Betätigungshebel 43 mit dem unteren Hebel 39 verbunden, wobei der Betätigungshebel 43 gegenüber dem Hebel 39 ortsfest angeordnet ist, so daß der Winkel α zwischen dem unteren Hebel 39 und dem Betätigungshebel 43 konstant bleibt. An dem Betätigungshebel 43 greift der Antrieb 32 an.

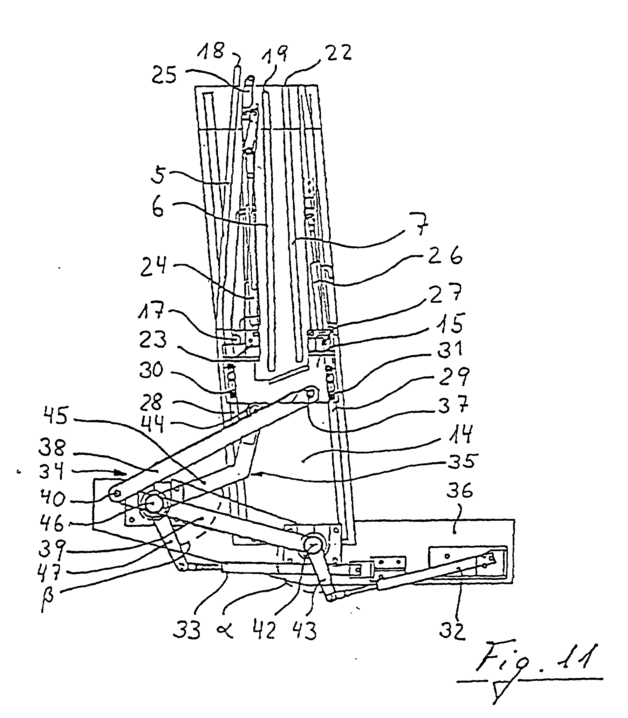

Über eine Zugbewegung des Antriebs 32 wird daher der Betätigungshebel 43 in Seitenansicht von der linken Fahrzeugseite aus gegen den Uhrzeigersinn verschwenkt (Fig. 11), so daß der untere Hebel 39 des Zug-Schub-Gestänges 34 ebenfalls gegen den Uhrzeigersinn verschwenkt wird und das Kniegelenk 40 einknickt, wodurch der obere Hebel 38 mit einknickt und dadurch über seine Anlenkachse 37 das Hauptlager 15 in den Führungsbahnen 28 und 29 abwärts zieht. Dieses Abwärtsziehen kann im wesentlichen in einer gegen die Gewichtskraft des Hauptlagers 15 mit den Plattenteilen 5,6,7 gerichtete Aufbringung eines Druckes bestehen, um die durch die Gewichtskraft bedingte Abwärtsbewegung zu verlangsamen.

Im Verlauf der Abwärtsbewegung gelangt das Hauptlager 15 mit den Plattenteilen 5,6,7 in Eingriff mit dem zweiten Zug-Schub-Gestänge 35, das oberseitig von einer Führungsrolle 44 abgeschlossen ist, die an den Übertragungshebel 45 des zweiten Zug-Schub-Gestänges 35 anschließt. Dieser Übertragungshebel 45 ist in einem ebenfalls gegenüber dem Rahmen 36 ortsfesten Lager 46 gehalten, an dem auch ein Betätigungshebel 47 angelenkt ist, der das Zug-Schub-Gestänge 35 mit dem Antrieb 33 verbindet. Dieser Betätigungshebel 47 steht zu dem Übertragungshebel 45 in einem festen Winkel β, der sich auch während des Verschwenkens der Hebel 45,47 um das Lager 46 nicht ändert.

Während der Abwärtsbewegung übt das Hauptlager 15 einen Druck auf die Führungsrolle 44 aus, wodurch der Übertragungshebel 45 um das Hauptlager 46 in Ansicht von der linken Fahrzeugseite aus im Uhrzeigersinn verschwenkt wird und dabei den gegenüber diesem starren Betätigungshebel 47 mit im Uhrzeigersinn verschwenkt. Dadurch wird der als Hydraulikzylinder ausgebildete Antrieb 33 ausgefahren.

In unterer Totpunktlage des Hauptlagers 15 (Fig. 12) ist der Antrieb 32 in eingefahrener und der Antrieb 33 in ausgefahrener Position. Um aus dieser Stellung heraus die Aufwärtsbewegung des Hauptlagers 15 mit den Plattenteilen 5,6,7 aus dem Fahrzeuginnenraum 11 heraus bewirken zu können, müßte, um die beiden Hebel 38 und 39, die in dieser unteren Totpunktlage nahezu parallel zueinander sind, um das Kniegelenk 40 auseinanderzuschwenken, eine sehr hohe Kraft durch den Antrieb 32 aufgebracht werden.

Um dieses zu vermeiden, ist der zweite Antrieb 33 mit dem zweiten Zug-Schub-Gestänge 35 eingebaut, der im unteren Bereich der vertikalen Aufwärtsbewegung des Hauptlagers 15 sehr günstige Hebelverhältnisse ausbildet. Dieser Antrieb 33 wirkt daher im unteren Bereich der Vertikalbewegung unterstützend für den Antrieb 32 und ist mit diesem synchronisiert.

Um aus der unteren Totpunktlage die vertikale Aufwärtsbewegung des Hauptlagers 15 zu bewirken, wird der Hydraulikzylinder 32 im ausfahrenden und der Hydraulikzylinder 33 im einfahrenden Sinn betätigt. Die Synchronisation ist dabei so ausgebildet, daß beide Hydraulikzylinder über eine gleiche Einwirkzeit mit Druckmittel gleichen Drucks beaufschlagt werden, so daß sie die gleiche Kraft ausüben. Durch die unterschiedlichen Drehmomente um die Lager 42 bzw. 46 und die unterschiedlichen Kinematiken der Zug-Schub-Gestänge 34 und 35 ergibt sich ein gleicher vertikaler Weg der Führungsrolle 44 und der Anlenkachse 37 am Hauptlager 15, so daß beide Antriebsquellen 32,33 die Aufwärtsbewegung des Hauptlagers 15 unterstützen und daher eine Kräfteteilung stattfindet.

Bei Einfahren des Hydraulikzylinders 33 wird der Betätigungshebel 47 gegen den Uhrzeigersinn verschwenkt, so daß der Übertragungshebel 45, der gegenüber dem Betätigungshebel 47 um den konstanten Winkel β versetzt ist, um das Lager 46 ebenfalls gegen den Uhrzeigersinn verschwenkt wird, wodurch die den Bodenbereich des Hauptlagers 15 unterstützende Führungsrolle 44 im Sinne eines Aufwärtsschwenkens betätigt wird. Gleichzeitig wird der Hydraulikzylinder 32 ausgefahren, überträgt dabei eine Schubkraft auf den Betätigungshebel 43, wodurch dieser um das Lager 42 im Uhrzeigersinn verschwenkt wird und dabei den starr gegenüber diesem Betätigungshebel 43 um den Winkel α angeordneten unteren Hebel 39 ebenfalls im Uhrzeigersinn verschwenkt. Durch dieses Verschwenken des unteren Hebels 39 im Uhrzeigersinn wird das Kniegelenk 40 mit verschwenkt und dadurch die Anlenkachse 37 des Hebels 38 in dem Hauptlager 15 aufgrund der Zwangsführung des Hauptlagers 15 in den Führungen 28 und 29 im Sinne einer Aufwärtsbewegung verfahren. Der Wirkungsgrad, der aus der Kraftübertragung durch den Antrieb 32 in dieser Phase der Bewegung erfolgt, ist, wie bereits erwähnt, sehr gering, da aufgrund der beinahe parallelen Lage der Hebel 38 und 39 aus dem Drehmoment um das Lager 42 im wesentlichen nur eine seitwärts gerichtete Kraft der Anlenkachse 37 resultiert und erst mit zunehmender Aufspreizung der Hebel 38 und 39 um das Kniegelenk 40 die vertikale Komponente der Kraft auf die Anlenkachse 37 in den Vordergrund rückt. Daher ist in diesem unteren Bereich der Vertikalbewegung des Hauptlagers 15 die durch das zweite Zug-Schub-Gestänge 35 über den Antrieb 33 ausgeübte Kraft maßgeblich.

Durch diese Zwei-Hebel-Konstruktion kann das Ausmaß des an der jeweiligen Fahrzeugseite liegenden Rahmens 36 gering gehalten werden, andererseits wird eine nicht zu hohe Kraft zur Betätigung des Aufwärtsverfahrens der Plattenteile 5,6,7 erreicht, so daß dieses Aufwärtsverfahren schnell durchzuführen ist, was etwa bei einem plötzlich einsetzenden Schauer notwendig ist.

Neben der hier gezeigten Anordnung einer Führungsmechanik 10 sind auch zahlreiche andere Versionen vorstellbar. Im vorliegenden Ausführungsbeispiel erfolgt die Bewegung der Plattenteile vollautomatisch, eine Handbetätigung ist, insbesondere wenn die Plattenteile 5,6,7 aus Kunststoff ausgebildet und daher leicht sind, ebenfalls vorstellbar. Statt der zum Antrieb verwendeten Hydraulikzylinder kommen selbstverständlich auch Elektromotore in Frage.

Um die Plattenteile 5,6,7 hinter der vorderen Sitzreihe abzulegen und dadurch insbesondere die volle Länge des Kofferraumes bei Demontage der hinteren Sitzreihen zu erhalten, ist eine umgekehrte Anordnung der Plattenteile 5,6,7 und der Führungsmechanik 10 möglich, so daß sich dann die vertikale Führung 14 zwischen den vorderen beiden Plattenteilen befände und dadurch die Plattenteile 5,6,7 direkt hinter den Vordersitzen abgelegt würden.

Auch ist es vorstellbar, die Plattenteile 5,6,7 insgesamt in den Heckbereich abzulegen und dabei die Heckklappe als Aufnahmeraum für die Packlage zu nutzen. Dieses kommt insbesondere bei lamellenartigen Plattenteilen 5,6,7 in Frage, die dann nach Art einer Rolljalousie entlang einer Führung in die Heckklappe abgesenkt werden könnten. Die vorliegende Anordnung hat jedoch den Vorteil, daß die Plattenteile 5,6,7 in Packlage hinter den Lehnen einer Sitzreihe sicher und unbeweglich verstaut sind, wobei nur sehr wenig Kofferraumtiefe durch dieses Paket verlorengeht. Auch der Sitzkomfort für die Insassen bleibt voll erhalten.

Durch die Ablage der Plattenteile 5,6,7 mit Abstand zum Fahrzeugdach bleibt in jedem Fall die freie Sicht nach hinten unbeeinträchtigt.

Für bestimmte Anforderungen kann es wünschenswert sein, zum Verfahren der Plattenteile 5,6,7 in den Fahrzeuginnenraum 11 mehrere Einzelmechaniken auszubilden, so daß je nach Bedarf entweder einzelne oder mehrere bzw. alle Plattenteile 5,6,7 in Offenstellung verfahren werden können.

## Patentansprüche

1. Kraftfahrzeug (1) mit karosseriefesten, eine Dachfläche (2) abstützenden Seitenrahmen (3;4), wobei die Dachfläche (2) zumindest zwei in Schließstellung flächig parallel liegende und in eine Offenstellung überführbare Plattenteile (5;6;7) umfaßt, die mittels einer Führungsmechanik (10) von der flächigen Parallellage in eine vollständig in den Karosserieinnenraum (11) eingefahrene Packlage, in der sie im wesentlichen vertikal und parallel voreinanderliegend angeordnet sind, überführbar sind, **dadurch gekennzeichnet, daß** die Plattenteile (5;6;7) in Packlage mit Abstand zum Dachbereich angeordnet sind.

2. Kraftfahrzeug nach Anspruch 1 mit einer sich bis zum Heckbereich erstreckenden Dachfläche, insbesondere Van, Geländefahrzeugen, Kombifahrzeug oder Kleinbus, **dadurch gekennzeichnet, daß** das Kraftfahrzeug (1) zumindest drei Plattenteile umfaßt.

3. Kraftfahrzeug nach einem der Ansprüche 1 oder 2, **dadurch gekennzeichnet, daß** die Plattenteile (5;6;7) in Offenstellung hinter den Sitzlehnen einer Sitzreihe gelagert sind.

4. Kraftfahrzeug nach einem der Ansprüche 1 bis 3, **dadurch gekennzeichnet, daß** die Plattenteile (5;6;7) im wesentlichen die vollständige Breite der Dachfläche (2) zwischen den Seitenrahmen (3;4) und im wesentlichen die gesamte Länge der Dachfläche (2) einnehmen.

5. Kraftfahrzeug nach einem der Ansprüche 1 bis 4, **dadurch gekennzeichnet, daß** das dem Fahrzeugheck zugewandte Plattenteil (7) an ein karosseriefestes hinteres Querteil der Dachfläche (2) angrenzt.

6. Kraftfahrzeug nach einem der Ansprüche 1 bis 4, **dadurch gekennzeichnet, daß** das dem Fahrzeugheck zugewandte Plattenteil (7) unmittelbar an die Heckscheibe (12) oder Heckklappe des Fahrzeuges (1) anschließt.

7. Kraftfahrzeug nach einem der Ansprüche 1 bis 6, **dadurch gekennzeichnet, daß** die Heckscheibe (12) rahmenlos ausgebildet und versenkbar ist.

8. Kraftfahrzeug nach einem der Ansprüche 1 bis 7, **dadurch gekennzeichnet, daß** die Plattenteile (5;6;7) in Packstellung in den Fahrzeuginnenraum (11) überführbar sind.

9. Kraftfahrzeug nach einem der Ansprüche 1 bis 8, **dadurch gekennzeichnet, daß** zumindest einzelne oder mehrere der Plattenteile (5;6;7) aus im wesentlichen transparentem Material bestehen.

10. Kraftfahrzeug nach einem der Ansprüche 1 bis 9, **dadurch gekennzeichnet, daß** zumindest einzelne oder mehrere der Plattenteile (5;6;7) aus einem Blechmaterial bestehen.

11. Kraftfahrzeug nach einem der Ansprüche 1 bis 10, **dadurch gekennzeichnet, daß** die Führungsmechanik (10) eine horizontale Führung für Teilbereiche der Plattenteile (5;6;7) an den Seitenrahmen (3;4) sowie eine im wesentlichen vertikale Führung (14) zur Absenkung der Plattenteile (5;6;7) in den Karosserieinnenraum (11) umfaßt.

12. Kraftfahrzeug nach einem der Ansprüche 1 bis 11, **dadurch gekennzeichnet, daß** die Plattenteile (5;6;7) miteinander verbunden und über ein in der vertikalen Führung (14) abwärts bewegbares Hauptlager (15) in den Fahrzeuginnenraum (11) versenkbar sind.

13. Kraftfahrzeug nach Anspruch 12, **dadurch gekennzeichnet, daß** die Plattenteile (5;6;7) während der Vertikalbewegung senkrecht ausgerichtet sind.

14. Kraftfahrzeug nach einem der Ansprüche 12 oder 13, **dadurch gekennzeichnet, daß** die Plattenteile (5;6;7) quadratischen oder rechteckigen Umriß aufweisen, sich jeweils mit einer vorderen (16;19;21) und einer hinteren (18;20;22) Querkante senkrecht zu den Fahrzeug-Seitenrahmen (3;4) erstrecken, die vorderen beiden Plattenteile (5;6) an den einander zugewandten Querkanten (18;19) gelenkig miteinander verbunden sind und das vordere Plattenteil (5) über ein seiner vorderen Querkante (16) zugeordnetes Führungsglied (17) in einer dem Seitenrahmen (3;4) zugeordneten Führungsbahn (13) horizontal verschieblich geführt ist.

15. Kraftfahrzeug nach Anspruch 14, **dadurch gekennzeichnet, daß** die Dachfläche (2) drei versenkbare Plattenteile (5;6;7) umfaßt, die hintere Querkante (20) des mittleren Plattenteils (6) und die vordere Querkante (21) des hinteren Plattenteils (7) an dem Hauptlager (15) angelenkt und die mittlere (6) und die hintere Platte (7) in gegenläufigen Schwenkbewegungen aus der horizontalen Schließstellung in eine vertikale Stellung verschwenkbar sind.

16. Kraftfahrzeug nach Anspruch 15, **dadurch gekennzeichnet. daß** während des Verschwenkens des mittleren Plattenteils (6) aus der horizontalen Stellung in die vertikale Stellung das vordere Plattenteil (5) an seiner Anlenkung (25) zum mittleren Plattenteil (6) von diesem abknickt und mit seiner vorderen Querkante (16) in der Führungsbahn (13) der Seitenrahmen (3;4) horizontal nach hinten verfährt.

17. Kraftfahrzeug nach einem der Ansprüche 12 bis 16, **dadurch gekennzeichnet, daß** für die Bewegung des Hauptlagers (15) zumindest ein Antrieb (32) vorgesehen ist, der seine Antriebskraft über ein oder mehrere Zug-Schub-Gestänge (34;35) auf das Hauptlager (15) überträgt.

18. Kraftfahrzeug nach Anspruch 17, **dadurch gekennzeichnet, daß** in einem unteren Bereich der Vertikalbewegung das Hauptlager (15) in Eingriff mit einem zweiten Zug-Schub-Gestänge (35) gelangt, das über einen weiteren Antrieb (33) im unteren Bereich der vertikalen Abwärts- bzw. Aufwärtsbewegung wirksam ist.

19. Kraftfahrzeug nach Anspruch 18, **dadurch gekennzeichnet, daß** zur Bewirkung der vertikalen Aufwärtsbewegung der Plattenteile (5;6;7) die Antriebe (32;33) für die Zug-Schub-Gestänge (34;35) miteinander synchronisiert sind.

20. Kraftfahrzeug nach Anspruch 19, **dadurch gekennzeichnet, daß** die beiden Antriebsquellen (32;33) von Hydraulikzylindern gebildet sind, die zur Bewirkung der Aufwärtsbewegung der Plattenteile (5;6;7) über eine gleiche Zeit mit einem gleichen Druck beaufschlagt werden.

## Claims

1. Motor vehicle (1) with side frames (3;4) secured to the body and supporting a roof area (2), the roof area (2) comprising at least two panel sections (5;6;7) that lie plane parallel in the closed position and can be converted to an open position, which sections can be converted from the plane parallel position to a packed position that is fully retracted inside the body interior (11) by means of drive mechanics (10), in which position the sections are arranged essentially vertically and parallel one in front of the other, **characterised in that** the panel sections (5;6;7) are arranged in a packed position at a certain distance from the roof area.

2. Motor vehicle according to Claim 1, with a roof area extending as far as the rear area, particularly vans, all-terrain vehicles, estate vehicles or minibuses, **characterised in that** the motor vehicle (1) comprises at least three panel sections.

3. Motor vehicle according to one of Claims 1 or 2, **characterised in that** the panel sections (5;6;7) are mounted in the open position behind the seat rests of a row of seats.

4. Motor vehicle according to one of Claims 1 to 3, **characterised in that** the panel sections (5;6;7) occupy essentially the entire width of the roof area (2) between the side frames (3;4) and essentially the entire length of the roof area (2).

5. Motor vehicle according to one of Claims 1 to 4, **characterised in that** the panel section (7) facing the rear of the vehicle lies adjacent to a rear transverse section of the roof area (2) secured to the body.

6. Motor vehicle according to one of Claims 1 to 4, **characterised in that** the panel section (7) facing the rear of the vehicle is directly connected to the rear windscreen (12) or tailgate of the vehicle (1).

7. Motor vehicle according to one of claims 1 to 6, **characterised in that** the rear windscreen (12) is designed without a frame and can be lowered.

8. Motor vehicle according to one of Claims 1 to 7, **characterised in that** the plate sections (5;6;7) can be converted to the packed position in the vehicle interior (11).

9. Motor vehicle according to one of Claims 1 to 8, **characterised in that** at least individual or several of the panel sections (5;6;7) consist essentially of transparent material.

10. Motor vehicle according to one of Claims 1 to 9, **characterised in that** at least individual or several of the panel sections (5;6;7) consist of sheet metal material.

11. Motor vehicle according to one of Claims 1 to 10, **characterised in that** the guide mechanics (10) comprises a horizontal guide for partial areas of the plate sections (5;6;7) on the side frames (3;4) and an essentially vertical guide (14) for lowering the panel sections (5;6;7) into the body interior (11).

12. Motor vehicle according to one of Claims 1 to 11, **characterised in that** the panel sections (5;6;7) are connected to each other and can be lowered into the vehicle interior (11) by means of a main bearing (15) that can be moved downwards in the vertical guide (14).

13. Vehicle according to Claim 12, **characterised in that** the panel sections (56;7) are vertically aligned during the vertical movement.

14. Motor vehicle according to one of Claims 12 or 13, **characterised in that** the panel sections (5;6;7) exhibit a square or rectangular contour, each extend vertically to the vehicle side frames (3;4) with a leading (16;19;21) and a trailing (18;20;22) transverse edge, the two front panel sections (5;6) are connected together by articulation on the transverse edges (18;19) facing each other, and **in that** the front panel section (5) is guided so that it is horizontally displaced in a guide path (13) assigned to the side frame (3;4) by means of a guide element (17) assigned to its leading transverse edge (16).

15. Motor vehicle according to Claim 14, **characterised in that** the roof area.(2) comprises three panel sections (5;6;7) that can be lowered, the trailing transverse edge (20) of the. central panel section (6) and the leading transverse edge (21) of the rear panel section (7) are articulated to the main bearing (15) and **in that** the central (6) and rear panel (7) can be swivelled in opposite swivel movements from the horizontal closed position into a vertical position.

16. Motor vehicle according to Claim 15, **characterised in that** during the swivel movement of the central panel section (6) from the horizontal position into the vertical position the front panel section (5) deviates from its articulation (25) to the central panel section (6) at the point of articulation, and moves horizontally to the rear with its leading transverse edge (16) in the guide path (13) of the side frames (3;4).

17. Motor vehicle according to one of Claims 12 to 16, **characterised in that** at least one drive (32) is provided for the movement of the main bearing (15), which drive transmits its driving force via one or more push-pull rods (34;35) to the main bearing (15).

18. Motor vehicle according to Claim 17, **characterised in that** in a lower area of the vertical movement the main bearing (15) engages with a second set of push-pull rods (35) which are activated by a further drive (33) in the lower area of the vertical downward and upward movement.

19. Motor vehicle according to Claim 18, **characterised in that** in order to effect the vertical upward movement of the panel sections (5;6;7) the drives (32;33) for the push-pull rods (34;35) are mutually synchronised.

20. Motor vehicle according to Claim 19, **characterised in that** the two drive sources (32;33) are formed by hydraulic cylinders which are actuated for the same time and with the same pressure to effect the upward movement of the panel sections (5;6;7).

## Revendications

1. Véhicule automobile (1) comportant des châssis latéraux (3, 4) solidaires de la carrosserie et soutenant la surface de toit (2), cette surface (2) comprenant au moins deux éléments de plaque (5, 6, 7) qui peuvent être conduits parallèlement à plat en position de fermeture, ou en position d'ouverture, par un mécanisme de guidage (10) pour passer de la position parallèle à plat dans une position de rangement rentrés complètement à l'intérieur de la carrosserie (11), dans laquelle ils sont essentiellement parallèles et verticaux,
**caractérisé en ce que**
les éléments de plaque (5, 6, 7) en position de rangement se trouvent à une certaine distance de la zone de toit.

2. Véhicule automobile (1), selon la revendication 1, comportant une surface de toit qui arrive jusqu'au niveau arrière, notamment van, véhicule tous terrains, véhicule combiné ou minibus,
**caractérisé en ce que**
le véhicule comporte au moins trois éléments de plaque.

3. Véhicule automobile (1), selon l'une des revendications 1 ou 2,
**caractérisé en ce que**
les éléments de plaque (5, 6, 7) se logent en position d'ouverture derrière les dossiers d'une rangée de sièges.

4. Véhicule automobile (1), selon l'une des revendications 1 à 3,
**caractérisé en ce que**
les éléments de plaque (5, 6, 7) occupent essentiellement toute la largeur de la surface (2) du toit entre les châssis latéraux (3, 4) et essentiellement toute la longueur de la surface du toit (2).

5. Véhicule automobile (1), selon l'une des revendications 1 à 4,
**caractérisé en ce que**
l'élément de plaque (7) tourné vers l'arrière du véhicule est adjacent à une partie transversale arrière de la surface du toit (2), qui est solidaire de la carrosserie.

6. Véhicule automobile (1), selon l'une des revendications 1 à 4,
**caractérisé en ce que**
l'élément de plaque (7) du côté de l'arrière du véhicule est relié directement à la vitre arrière (12) ou au capot arrière du véhicule (1).

7. Véhicule automobile (1), selon l'une des revendications 1 à 6,
**caractérisé en ce que**
la lunette arrière (12) ne comporte pas de cadre et peut basculer.

8. Véhicule automobile (1), selon l'une des revendications 1 à 7,
**caractérisé en ce que**
les éléments de plaque (5, 6, 7) peuvent être conduits en position de rangement à l'intérieur de l'habitacle (11).

9. Véhicule automobile (1), selon l'une des revendications 1 à 8,
**caractérisé en ce que**
au moins l'un ou plusieurs des éléments de plaque (5, 6, 7) sont en une matière essentiellement transparente.

10. Véhicule automobile (1), selon l'une des revendications 1 à 8,
**caractérisé en ce que**
au moins un ou plusieurs des éléments de plaque (5, 6, 7) sont en tôle.

11. Véhicule automobile (1), selon l'une des revendications 1 à 10,
**caractérisé en ce que**
le mécanisme de guidage (10) comprend un guide horizontal pour des zones partielles des éléments de plaque (5, 6, 7) sur les châssis latéraux (3, 4) ainsi qu'un guide essentiellement vertical (14) pour abaisser les éléments de plaque (5, 6, 7) à l'intérieur de la carrosserie (11).

12. Véhicule automobile (1), selon l'une des revendications 1 à 11,
**caractérisé en ce que**
les éléments de plaque (5, 6, 7) sont reliés les uns aux autres et peuvent être abaissés par un palier principal (15) qui peut être descendu dans un guide vertical (14), pour descendre dans l'habitacle (11) du véhicule.

13. Véhicule automobile (1), selon la revendication 12,
**caractérisé en ce que**
les éléments de plaque (5, 6, 7) sont alignés verticalement pendant leur mouvement vertical.

14. Véhicule automobile (1), selon l'une des revendications 12 ou 13,
**caractérisé en ce que**
les éléments de plaque (5, 6, 7) ont un contour carré ou rectangulaire et s'étendent avec leur arête transversale avant (16, 19, 21) et leur arête arrière (18, 20, 22), perpendiculairement aux châssis latéraux (3, 4) du véhicule, les deux éléments de plaque avant (5, 6) étant reliés de manière articulée par leurs arêtes adjacentes (18, 19) et l'élément de plaque avant (5) est guidé horizontalement de manière coulissante par un élément de guidage (17) associé à son arête transversale avant (16) dans un chemin de guidage (13) associé aux châssis latéraux (3, 4).

15. Véhicule automobile (1), selon la revendication 14,
**caractérisé en ce que**
la surface de toit (2) comprend trois éléments de plaque (5, 6; 7) qui peuvent être abaissés, l'arête transversale inférieure (20) de l'élément de plaque intermédiaire (6) et l'arête transversale avant (21) de l'élément de plaque arrière (7) étant articulées au palier principal (15), et la plaque intermédiaire (6) et la plaque arrière (7) effectuant des mouvements de basculement opposés à partir de la position de fermeture horizontale vers la position verticale.

16. Véhicule automobile (1), selon la revendication 15,
**caractérisé en ce que**
pendant le mouvement de basculement d'élément de plaque intermédiaire (6) à partir de sa position horizontale dans sa position verticale, l'élément de plaque avant (5) se plie au niveau de son articulation (25) vers l'élément de plaque intermédiaire (6) et recule avec son arête transversale avant (16) dans le chemin de guidage (13) des châssis latéraux (3, 4), horizontalement.

17. Véhicule automobile (1), selon l'une des revendications 12 à 16,
**caractérisé par**
au moins un moyen d'entrainement (32) pour le mouvement du palier principal (15), ce moyen d'entraînement transmettant sa force motrice au palier principal (15) par une ou plusieurs tringleries de traction et de poussée (34, 35).

18. Véhicule automobile (1), selon la revendication 17,
**caractérisé en ce que**
dans une zone inférieure du mouvement vertical, le palier principal (15) est en prise avec une seconde tringlerie de traction et de poussée (35) qui assure le mouvement de descente et de remontée verticale dans la zone inférieure par un autre moyen d'entraînement (33).

19. Véhicule automobile (1), selon la revendication 18,
**caractérisé en ce que**
pour produire le mouvement de descente verticale des éléments de plaque (5, 6, 7), les moyens d'entraînement (32, 33) des tringleries de traction et de poussée (34, 35) sont synchronisés.

20. Véhicule automobile (1), selon la revendication 19,
**caractérisé en ce que**
les deux sources d'entraînement (32, 33) sont constituées par des vérins hydrauliques qui produisent le mouvement de remontée des éléments de plaque (5, 6, 7) en étant sollicités à la même pression et pendant le même temps.
